# EUROPÄISCHE PATENTSCHRIFT

(11) **EP 2 577 128 B1**
(45) Veröffentlichungstag und Bekanntmachung des Hinweises auf die Patenterteilung: **26.03.2014**
(21) Anmeldenummer: 11725664.4
(22) Anmeldetag: 03.06.2011
(51) Int. Cl.: G05D 16/00, G05D 16/10, F16K 27/02, F16K 1/30

(54) **DRUCKMINDERER FÜR EINE VORRICHTUNG ZUR ANREICHERUNG VON FLÜSSIGKEIT MIT KOHLENDIOXID**
PRESSURE REDUCER FOR A DEVICE FOR ENRICHING A LIQUID WITH CARBON DIOXIDE
REDUCTEUR DE PRESSION POUR UN DISPOSITIF D'ENRICHISSEMENT DE LIQUIDE EN DIOXYDE DE CARBONE

(30) Priorität: 03.06.2010 EP 10164892
(43) Veröffentlichungstag der Anmeldung: 10.04.2013
(73) Patentinhaber: Luxembourg Patent Company S.A., 7440 Lintgen (LU)
(72) Erfinder: BORMES, Sascha, 54344 Kenn (DE)
(74) Vertreter: Office Freylinger
(86) Internationale Anmeldenummer: PCT/EP2011/059200
(87) Internationale Veröffentlichungsnummer: WO 2011/151444

(56) Entgegenhaltungen:
- EP-A1- 0 428 901
- EP-A1- 1 818 749
- WO-A1-2006/103533
- FR-A- 1 215 097
- US-A- 3 319 829

## Beschreibung

### Technisches Gebiet

Die vorliegende Erfindung betrifft allgemein einen Druckminderer (auch Druckminderventil, Druckminderungsventil oder Reduzierventil genannt) und speziell einen Druckminderer zur Verwendung als Komponente einer Vorrichtung zur Gasanreicherung von Flüssigkeit, insbesondere zur Anreicherung von Trinkwasser mit Kohlendioxid.

### Stand der Technik

Vorrichtungen für die Anreicherung von Getränken, insbesondere Trinkwasser, mit Gas, insbesondere mit Kohlendioxid (auch als Karbonisierung des Trinkwassers bezeichnet) sind seit langem bekannt. Meist erfolgt die Karbonisierung von Trinkwasser in einem Vorratsbehälter. In letzter Zeit wurden Vorrichtungen entwickelt, um Leitungswasser im sogenannten Durchlaufverfahren mit Kohlendioxid anzureichern. Letztere eignen sich besonders zur Verwendung im Haushalt oder in Gaststätten. Beim Durchlaufverfahren ohne Vorratsbehälter erfolgt die Karbonisierung in einem Durchlaufmischer welcher unmittelbar an die Trinkwasserleitung angeschlossen ist. Im Vergleich zu klassischen Vorrichtungen mit Vorratsbehälter, ist eine Vorrichtung zur Karbonisierung im Durchlaufverfahren ohne Vorratsbehälter wesentlich kompakter, kostengünstiger und zudem auch hygienischer. Eine Vorrichtung zur Gasanreicherung von Trinkwasser mit Kohlendioxid im Durchlaufverfahren ist z.B. in der internationalen Patentanmeldung WO 2009/021960 beschrieben.

Ein wichtiger Bestandteil einer solchen Vorrichtung ist der Druckminderer welcher an die Kohlendioxidflasche angeschlossen wird um den Durchlaufmischer mit CO₂ unter geeignetem Druck zu versorgen. Ein geeignetes Druckminderventil für die Regelung des Gasdrucks in Funktion des Wasserdrucks wird z.B. von der ROTAREX Gruppe unter der Bezeichnung B0820 vertrieben.

Das europäische Patent EP 0 428 901 beschreibt einen ebenfalls grundsätzlich geeigneten Druckminderer kompakter Bauart. Der Druckminderer nach EP 0428 901 ist als Flaschenventil ausgestaltet und gibt den Ausgangsdruck je nach Einstellung vor.

Letztgenannter Druckminderer umfasst ein Gehäuse mit einem Einlass in einer Anschlussverschraubung zum Verschrauben mit einer CO₂-Flasche, und mit einem Auslass in einer weiteren Anschlussverschraubung. Zwischen Einlass und Auslass bildet das Gehäuse eine Entspannungskammer aus. Im Gehäuse ist ein axial verschiebbarer Regelkörper vorgesehen und in Schließrichtung federbelastet. Der Regelkörper weist eine Dichtung auf, die mit einem Sitz zusammenwirkt um die Verbindung zwischen Einlass und Entspannungskammer dicht zu verschließen. Ein Stellkolben ist mit einer zweiten Feder belastet um den Regelkörper abhängig vom Druck in der Entspannungskammer gegen die erste Feder in Öffnungsrichtung zu verschieben.

In ganz herkömmlicher Bauart werden Ventile die einem gewissen EingangsDruck standhalten müssen, wie z.B. auch der Druckminderer gemäss EP 0428 901, sowohl mit einem Gehäuse wie auch einem Regelkörper aus Metal hergestellt. Typischerweise wird z.B. Messing als Material für den Ventilkörper verwendet.

Es ist inzwischen auch bekannt, Druckminderer mit einem Ventilgehäuse herzustellen, das zumindest zum Teil aus Kunststoff besteht. Theoretisch lassen sich durch die Verwendung von Kunststoff sowohl die Materialkosten, wie auch die Verfahrenskosten und zudem das Komponentengewicht reduzieren. Ein solches Ventil ist beispielsweise im U.S. Patent Nr. 5,640,997 offenbart. Nachteilig bei Kunststoffen ist grundsätzlich die bei hoher Beanspruchung geringe Lebensdauer des Ventils. Zudem müssen Ventile in der Regel gewissen Sicherheitsanforderungen genügen. Entsprechend wird in US 5,640,997 vorgeschlagen, die beanspruchten Flächen mit einer Metallbeschichtung zu versehen. Dies hat jedoch den Nachteil, dass Kosteneinsparungen, welche durch die Verwendung von Kunststoff zur Gehäuseherstellung erzielt werden könnten, zumindest zum Teil aufgrund der benötigten Metallbeschichtung und der hiermit verbundenen zusätzlichen Anlagen und Verfahrensschritte teilweise oder ganz wieder geopfert werden.

Die Merkmale des Oberbegriffs der Anspruch 1 sind aus EP 1818749 A1 bekannt.

### Aufgabe der Erfindung

Eine erste Aufgabe der vorliegenden Erfindung ist es somit, eine verbesserte Ausgestaltung eines Druckminderers vorzuschlagen, welche bei möglichst geringen Einbussen bezüglich Qualität und Sicherheit des Druckminderers eine kostengünstigere Herstellung ermöglicht. Diese Aufgabe wird durch einen Druckminderer nach Anspruch 1 gelöst.

### Allgemeine Beschreibung der Erfindung

Der vorgeschlagene Druckminderer ist speziell für eine Vorrichtung zur Gasanreicherung von Flüssigkeit, insbesondere zur Kohlendioxid-Anreicherung von Trinkwasser, entwickelt. Der Druckminderer umfasst ein Gehäuse mit einem Einlass, einem Einlass-Anschluss zum Anschließen des Druckminderers an einen Gasbehälter, einem Auslass, sowie einem Auslass-Anschluss zum Anschließen des Druckminderers an einen Durchlaufmischer. Im Gehäuse ist, im Strömungsweg zwischen Einlass und Auslass, eine Entspannungskammer zum Entspannen des Anreicherungsgases auf einen geminderten Druck vorgesehen.

Der Druckminderer umfasst einen im Gehäuse angeordneten und axial verschiebbaren Regelkörper, welcher mittels einer ersten Feder in Schließrichtung federbelastet ist. Der Regelkörper dient dem geregelten Öffnen bzw. Verschließen einer Verbindung zwischen Einlass und Entspannungskammer. Hierzu weist der Regelkörper eine erste Dichtung auf, die mit einer Sitzfläche zusammenwirkt, welche stromaufwärts der Entspannungskammer angeordnet ist.

Der Druckminderer umfasst ferner einen im Gehäuse angeordneten und axial verschiebbaren Stellkolben zur mechanischen Betätigung des Regelkörpers. Der Stellkolben ist mittels einer zweiten Feder federbelastet, um den Regelkörper abhängig vom Druck in der Entspannungskammer in Öffnungsrichtung zu verschieben und somit die Verbindung zwischen Einlass und Entspannungskammer zu öffnen. Der Stellkolben begrenzt eine Seite der Entspannungskammer, so dass deren variables Innenvolumen von der axialen Position des Stellkolbens bestimmt wird. Am Stellkolben ist eine zweite Dichtung vorgesehen, welche die Entspannungskammer nach Außen abdichtet.

Zur Lösung der obengenannten Aufgabe ist das Gehäuse aus Kunststoff gefertigt und der Druckminderer umfasst einen speziellen, separat gefertigten Einsatz aus einem geeigneten Material, z.B. aus Metall, insbesondere aus Messing, oder aus einem geeigneten Kunststoff, insbesondere einem glasfaserverstärkten Polyamid. Der Einsatz ist erfindungsgemäß in einer Aufnahme zwischen Einlass und Entspannungskammer im Kunststoff-Gehäuse befestigt. Der Einsatz umfasst eine Führungsbohrung, welche mit dem Einlass verbunden ist bzw. kommuniziert und den Regelkörper axial verschiebbar lagert, und eine an die Führungsbohrung anschließende Verbindungsbohrung, welche mit der Entspannungskammer verbunden ist bzw. mit dieser kommuniziert, und einen gegenüber der Führungsbohrung reduzierten Durchmesser hat. Dementsprechend bildet der Einsatz, durch die Stufe zwischen Verbindungsbohrung und Führungsbohrung, eine ringförmige Schulterfläche, welche als Sitzfläche mit der ersten Dichtung am Regelkörper zusammenwirkt.

Aufgrund der Verwendung eines aus Kunststoff, insbesondere einstückig aus Spritzgieß-Kunststoff, gefertigten Ventilgehäuses werden bedeutende Kosteneinsparungen ermöglicht. Der spezielle Einsatz bildet die funktionsrelevante und stark belastete hochdruckseitige Dicht- bzw. Sitzfläche aus. Diese kann aufgrund der Ausgestaltung des Einsatzes als separat gefertigtes Teil mit geringem Aufwand und hoher Präzision in dem Einsatz hergestellt werden.

In einer ersten Ausgestaltung der Erfindung kann der Einsatz beispielsweise aus Metall, insbesondere aus Messing, gefertigt sein. In dieser Ausgestaltung ist die ringförmige Schulterfläche, welche als Sitzfläche mit der ersten Dichtung am Regelkörper zusammenwirkt, in dem Metall ausgebildet. Dadurch wird im wesentlichen die Zuverlässigkeit und Qualität eines auf herkömmliche Art, d.h. mit einem Gehäuse ganz aus Metall, gefertigten Druckminderers erzielt.

In einer anderen Ausgestaltung kann der Einsatz aus einem geeigneten Kunststoff, insbesondere einem glasfaserverstärkten Polyamid, beispielsweise mit einem Glasfaseranteil von ca. 30% oder höher, gefertigt sein. Derartige glasfaserverstärkte Polyamide weisen eine sehr hohe Festigkeit auf und sind daher auch für die Beanspruchung unter hohem Druck geeignet. Darüber hinaus bietet die Ausgestaltung des Einsatzes als separat gefertigtes Teil die Möglichkeit, den Einsatz mitsamt der ringförmigen Schulterfläche, welche als Sitzfläche mit der ersten Dichtung am Regelkörper zusammenwirkt, einfach auszuwechseln, falls die Sitzfläche nach längerem Einsatz der Beanspruchung unter hohem Druck nicht standhalten sollte.

Es ist anzumerken, dass niederdruckseitig ohne weiteres der Gehäusekunststoff die Dichtfläche für die durch die zweite Dichtung am Stellkolben abgedichtete Fläche ausbilden kann, da niederdruckseitig wesentlich geringere Belastungen vorliegen und hier auch ein potentielles Leck unbedenklicher ist. Auch der Stellkolben selbst kann kostensparend aus Kunststoff gefertigt werden.

### Kurze Beschreibung der Figuren

Im Folgenden wird nun eine bevorzugte Ausgestaltung der Erfindung anhand der beiliegenden Figuren näher beschrieben. Diese zeigen:
FIG.1 eine Längsschnitt durch das Gehäuse einer ersten Ausgestaltung eines erfindungsgemäßen Druckminderes;
FIG.2 einen vergrößerten Längsschnitt eines im Druckminderer nach FIG.1 verwendeten Einsatzes.
FIG.3 eine Längsschnitt durch das Gehäuse einer zweiten Ausgestaltung eines erfindungsgemäßen Druckminderes;
FIG.4 einen vergrößerten Längsschnitt eines im Druckminderer nach FIG.3 verwendeten Einsatzes.

### Detaillierte Beschreibung anhand der Figuren

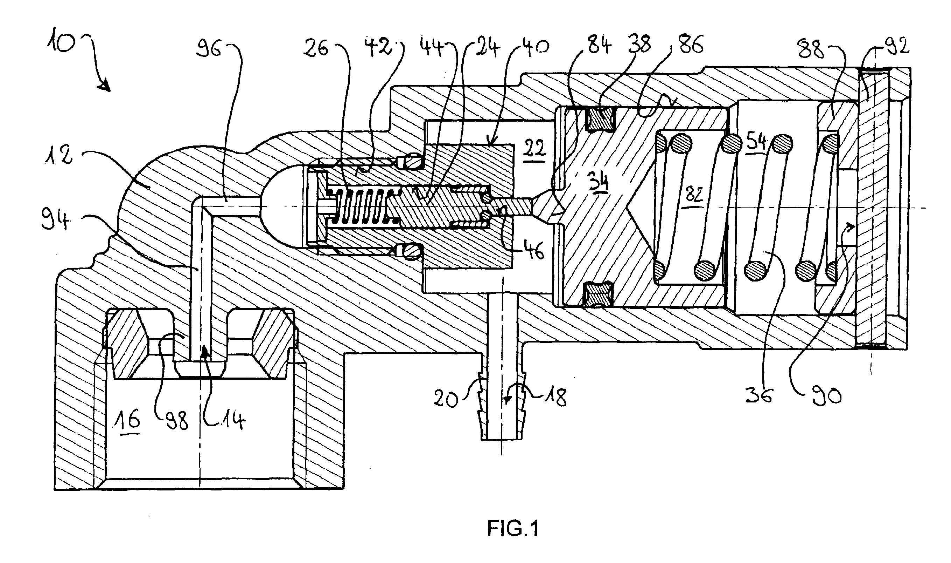

FIG.1 zeigt einen Druckminderer 10 im mittigen Längsschnitt durch dessen Gehäuse 12. Der Druckminderer 10 wurde speziell entwickelt zur Verwendung in einer Vorrichtung zur Gasanreicherung von Flüssigkeit, insbesondere zur Kohlendioxid-Anreicherung von Trinkwasser, wie bspw. in WO 2009/021960 offenbart.

Zunächst wird nun der Aufbau des Druckminderers 10 beschrieben. Das Gehäuse 12 hat einen Einlass 14 mit zugehörigem Einlass-Anschluss 16 zum Anschließen des Druckminderers 10 an einen Gasbehälter, bspw. eine CO₂-Patrone oder -Flasche. Der Einlass-Anschluss 16 kann durch eine nicht näher gezeigte, in axialer Verlängerung um den Einlass 14 in das Gehäuse 12 eingesetzte Gewindebuchse aus Metall ausgebildet sein, welche z.B. mit einem Kohlendioxid-Gasbehälter verschraubt wird. In bevorzugter Ausführung wird der Einlass-Anschluss 16 durch ein einstückig mit dem Gehäuse 12 geformtes Innengewinde ausgebildet. Das Gehäuse 12 hat weiterhin einen Auslass 18 mit zugehörigem Auslass-Anschluss 20 zum niederduckseitigen Anschluss des Druckminderers 12 insbesondere an einen Durchlaufmischer bspw. gemäss WO 2009/021960. Der Auslass-Anschluss 20 am Auslass 18 kann, wie in FIG.1 gezeigt, als Kopplung vom Typ Schlauch-Widerhaken oder bevorzugt, analog zum Einlass-Anschluss 16, durch ein einstückig mit dem Gehäuse 12 geformtes Gewinde (nicht gezeigt) ausgebildet sein.

Im Gehäuse 12 ist, in Strömungsrichtung zwischen Einlass 14 und Auslass 18, eine Entspannungskammer 22 vorgesehen, in welcher das Gas sich vom hohen Eingangs- bzw. Speicherdruck, typisch im Bereich von ca. 60 bar, auf einen zur Anreicherung geeigneten verhältnismäßig geringen Druck, typisch im Bereich von 3-5 bar, entspannt wird, bevor es am Auslass 18 austritt.

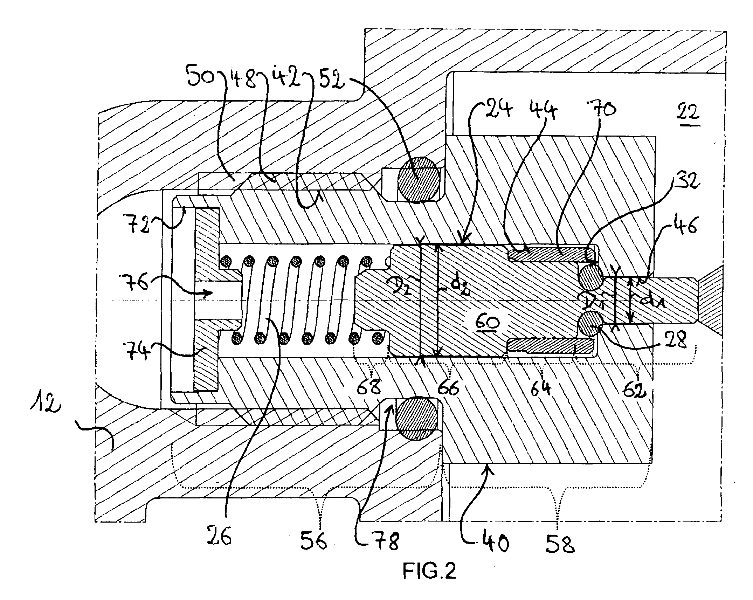

Im Gehäuse 12 ist ein axial verschiebbarer Schließkörper bzw. Regelkörper 24 angeordnet. Der Regelkörper 24 ist mittels einer ersten Feder 26 in Schließrichtung federbelastet, um eine Verbindung zwischen Einlass 14 und Entspannungskammer 22 zu verschließen. Wie am besten aus FIG.2 ersichtlich, ist der Regelkörper 24 mit einer ersten Dichtung 28, vorzugsweise einer O-Ring Dichtung, versehen, die mit einer Sitzfläche 32 stromaufwärts der Entspannungskammer 22 dichtend zusammenwirkt. Mit anderen Worten ist die Verbindung zum Einlass 18 hin abgedichtet, wenn der Regelkörper 24 in Schließstellung ist (wie in FIG.1 gezeigt).

Wie in FIG.1 gezeigt, ist im Gehäuse 12 weiterhin ein axial verschiebbarer Stellkolben 34 angeordnet, welcher die axiale Position des Regelkörpers 24 einstellt. Der Stellkolben 34 ist mittels einer zweiten Feder 36 federbelastet, um den Regelkörper 24 abhängig vom Druck in der Entspannungskammer 22 und gegen die Wirkung der ersten Feder 26 in Öffnungsrichtung, d.h. zum Einlass hin, zu verschieben. Bei zu geringem Druck in der Entspannungskammer 22 wird somit die Verbindung zwischen Einlass und Entspannungskammer geöffnet, da der Stellkolben 34 durch die zweite Feder 36 zum Regelkörper 24 hin verschoben wird. Der Stellkolben 34 begrenzt somit variabel eine Seite der Entspannungskammer 22, d.h. das variable Innenvolumen der Entspannungskammer 22 wird von der axialen Position des Stellkolbens 34 bestimmt. Entsprechend hat der Stellkolben 34 eine zweite Dichtung 38, welche die Entspannungskammer 22 nach Außen hin abdichtet.

Zu beachten ist, dass das Gehäuse 12 erfindungsgemäß aus Kunststoff gefertigt ist um eine möglichst kostengünstige Herstellung zu ermöglichen. Vorzugsweise wird das Gehäuse 12 aus einem geeigneten Kunststoff einstückig hergestellt, insbesondere im Spritzguss-Verfahren. Im Hinblick auf den typischerweise hohen Eingangsdruck von ca. 60 bar wird ein geeignetes Spritzgieß-Polyamid, insbesondere ein Polyamid mit Bruchspannung > 80 MPa bei Raumtemperatur, bevorzugt.

Zur Vermeidung von Einbussen bezüglich Qualität und Sicherheit umfasst der Druckminderer weiterhin, wie aus FIG.1-2 ersichtlich, einen speziellen Einsatz 40, welcher im Gegensatz zum Gehäuse 12, in der dargestellten Ausgestaltung aus Metall, vorzugsweise aus Messing, gefertigt ist. Der Einsatz 40 hat generell die Form einer Buchse und weist im Vergleich zum Gehäuse 12 bedeutend geringeres Gesamtvolumen auf, d.h. der Metallanteil ist drastisch reduziert im Vergleich zu einem herkömmlichen Druckminderer z.B. nach EP 0 428 901.

Im Folgenden wird der Einsatz 40 näher beschrieben. Wie am besten aus FIG.2 ersichtlich, ist der Einsatz 40 in einer Aufnahme 42 zwischen Einlass und Entspannungskammer im Gehäuse aus Kunststoff befestigt, vorzugsweise durch Schraubverbindung. Im Einsatz 40 ist eine Führungsbohrung 44 vorgesehen, welche mit dem Einlass 14 verbunden ist und den Regelkörper 24 axial verschiebbar lagert. Weiterhin ist eine koaxial an die Führungsbohrung 44 anschließende Verbindungsbohrung 46 vorgesehen, welche in die Entspannungskammer 22 mündet. Mit anderen Worten bildet die Verbindungsbohrung 46 im Einsatz 40 die dichtend schließbare Verbindung zwischen Einlass 14 und der Entspannungskammer 22. Die Verbindungsbohrung 46 ist gegenüber der Führungsbohrung 44 reduziert im Durchmesser. Somit bildet der Einsatz 40, durch die Stufe zwischen Verbindungsbohrung 46 und Führungsbohrung 44 eine ringförmige Schulterfläche aus Metall aus. Diese metallische Schulterfläche bildet die genannte Sitzfläche 32, mit welcher die erste Dichtung 28 am Regelkörper 24 zusammenwirkt. Entsprechend wird durch den Einsatz 40 gewährleistet, dass die hochdruckseitig abdichtende und stark beanspruchte Sitzfläche 32, trotz des Gehäuses aus Kunststoff, weiterhin aus Metall gebildet ist. Wie weiterhin am besten aus FIG.2 ersichtlich, ist am Einsatz ein Außengewinde 48 vorgesehen, mittels welchem der Einsatz 40 in einem entsprechenden Innengewinde 50 in der Aufnahme 42 eingeschraubt ist. Außengewinde 48 und Innengewinde 50 sind in der dargestellten Variante beispielsweise als metrisches Gewinde ausgebildet. Zwischen dem Metall-Einsatz 40 und dem Kunststoff-Gehäuse 12 ist, zur Abdichtung einer Verbindung zwischen Einlass 14 und Entspannungskammer 22 außerhalb des Einsatzes 40, eine dritte Dichtung 52, insbesondere eine O-Ring Dichtung, vorgesehen.

Wie FIG.1 wiederum zeigt, ist der Stellkolben 34 axial verschiebbar in einer zylindrischen Führungskammer 54 im Gehäuse 12 angeordnet, welche an einem Ende stirnseitig nach Außen (Atmosphäre) hin offen ist. Die Aufnahme 42 des Einsatzes 40 mündet in diese Führungskammer 54 und ist ebenfalls im Wesentlichen zylindrisch, jedoch mit deutlich geringerem Innendurchmesser als die Führungskammer 54 ausgestaltet. Wie aus FIG.1 hervorgeht, ist der maximale Außendurchmesser des Einsatzes 40 deutlich geringer als der minimale Innendurchmesser der Führungskammer 54. Hierdurch wird eine einfacher Zusammenbau von Gehäuse 12 und Einsatz 40 gewährleistet, da der Einsatz 40 durch die Führungskammer 54 eingefügt und eingeschraubt werden kann. Dementsprechend ist, wie in FIG.2 ersichtlich, der Einsatz 40 mit einen Schaftabschnitt 56 geringeren Durchmessers, an welchem das Außengewinde 48 angebracht ist, und einem Kopfabschnitt 58 größeren Durchmessers ausgestaltet, welcher vorzugsweise ein für ein Schraubwerkzeug geeignetes Profil aufweist, bspw. ein Standard-Sechskantschlüssel. Die Stufe zwischen Kopfabschnitt 58 und Schaftabschnitt 56 bildet eine weitere Schulterfläche, welche als axialer Anschlag 60 an einer Schulterfläche anliegt, welche durch die Stufe zwischen Führungskammer 54 und Aufnahme 42 ausgebildet ist, so dass die Montage weiter vereinfacht wird.

Es wird nun der Regelkörper 24 näher beschrieben. FIG.2 zeigt einen vergrößerten Längsquerschnitt des Regelkörpers 24, welcher einen einstückig aus Metall gefertigten Drehling 60, d.h. ein durch Drehen hergestelltes Teil, umfasst. Der Drehling 60 ist zylindrisch und mehrfach gestuft, so dass er Abschnitte mit unterschiedlichem Durchmesser aufweist. Er hat einen ersten auslassseitigen Abschnitt 62 geringen Außendurchmessers d1, einem zweiten mittleren Abschnitt 64 mittleren Außendurchmessers und einem einlassseitigen dritten Abschnitt 66 größeren Außendurchmessers d2. Der erste Abschnitt 62 ragt mit geringem aber zum Gasdurchlass genügend großem Radialspiel durch die Verbindungsbohrung 46, welche mit Innendurchmesser D1 im Einsatz 40 vorgesehen ist. Der erste Abschnitt 62 ragt durch die Verbindungsbohrung 46 hindurch, so dass er am Stellkolben 34 anliegt. Der erste Abschnitt 62 dient somit als Stift bzw. Stößel mittels welchem der Stellkolben 34 den Regelkörper 24 axial in Öffnungsrichtung verschieben kann und zugleich als radiale Führung. Im Übergang zwischen dem ersten Abschnitt 62 und dem zweiten Abschnitt 64 ist die erste Dichtung 28 gehalten. Der dritte Abschnitt 66 ist mit geringem Radialspiel in der Führungsbohrung 44 geführt, welche mit Innendurchmesser D2 im Einsatz 40 vorgesehen ist. Somit wird jeweils zwischen den zylindrischen Mantelflächen des ersten und dritten Abschnitts 62 bzw. 66 und der Führungsbohrung 44 bzw. der Verbindungsbohrung 46 ein ringförmiger zylindrischer Kanal ausgebildet über welchen Gas vom Einlass 14 durch die Verbindungsbohrung 46 in die Entspannungskammer strömen kann, wenn der Regelkörper 24 nicht in Schließstellung ist. Ein sowohl zur Führung des Regelkörpers 24 als auch für genügenden Gas-Durchsatz geeignetes Radialspiel D1-d1 bzw. D2-d2 liegt, je nach Dimensionierung, im Bereich von 0.02 bis 0.2 mm. Der Drehling 60 umfasst ferner einlassseitig einen vierten Abschnitt 68 geringeren Durchmessers, welcher als radiale Lagerung der ersten Feder 26 dient. Im Übergang zwischen erstem und zweitem Abschnitt 62, 64 ist die erste Dichtung 28 durch eine dort im Drehling 60 vorgesehene umfängliche Aussparung gehalten und teilweise hierin versenkt. Im zweiten Abschnitt 64 ist ein Außengewinde vorgesehen, auf welches eine Haltehülse 70 zur Sicherung der ersten Dichtung 28 aufgeschraubt ist und die Dichtung 28 teilweise einfasst. Hierdurch wird, insbesondere bei Verwendung einer kostengünstigen O-Ring Dichtung, die erste Dichtung 28 zuverlässig gegen übermäßige Verformung geschützt und in der Lage gesichert, so dass eine hohe Lebensdauer gewährleistet wird. Der Regelkörper 24 besteht somit aus lediglich drei kostengünstigen Teilen, dem Drehling 60, der ersten Dichtung 28 und der Haltehülse 70 und ist einfach zu fertigen.

Im Einsatz 40, ist wie in FIG.2 gezeigt, eine Aufnahme 72 vorgesehen, in welcher ein erster Halteteller 74 mit Gasdurchlassöffnung 76 gehalten ist. Der Halteteller 74 bildet ein feststehendes Auflager für die erste Feder 26, welche den Regelkörper 24 in Schließrichtung federbelastet. Zur Kosteneinsparung ist der Halteteller 74 befestigt durch Umbördelung bzw. Verformung des umgebenden Endbereichs des Einsatzes 40 welcher die Aufnahme 72 bildet. Ferner weist der Einsatz 40 im Übergang zwischen Schaftabschnitt 56 und Kopfabschnitt 58 eine Einschnürung 78 auf, in welcher die dritte Dichtung 52 gehalten ist, so dass auch hier eine kostengünstige O-Ring Dichtung sicher verwendet werden kann. Ähnlich dem Regelkörper 24 lässt sich der Einsatz 40 als verhältnismäßig kostengünstiges Drehteil herstellen, indem Führungsbohrung 44, Verbindungsbohrung 46 und Aufnahme 72 als Stufenbohrung eingebracht werden und Schaftabschnitt 56 mit Außengewinde 48, Einschnürung 78 und Kopfabschnitt 58 durch Drehen erzeugt wird. Als weiterer relevanter Bearbeitungsschritt wird die Kante der Sitzfläche 32 zur Führungsbohrung 44 hin gebrochen bzw. abgefast oder gerundet, um Beschädigung der ersten Dichtung 28 zu vermeiden bzw. deren Lebensdauer zu erhöhen.

Zur Betätigung des Regelkörpers 24, genauer zur Einstellung seiner axialen Position ist der Stellkolben 34 in der Führungskammer 54 beweglich gelagert. Der Stellkolben 34 wird nun kurz beschrieben. Dieser ist vorzugsweise, wie das Gehäuse 12 selbst, einstückig aus Kunststoff gefertigt, insbesondere als Spritzguss-Teil. Er weist eine Rückseite mit einer Lagerung 82 für die zweite Feder 36 auf. An der gegenüberliegenden Vorderseite hat der Stellkolben 34 einen koaxialen Fortsatz 84, welcher als Stößel bzw. Anschlag an der Stirnseite des stiftförmigen ersten Abschnitts 62 anliegt. Durch die entgegengesetzten Federbelastungen der Federn 26, 36 befinden sich Regelkörper 24 und Stellkolben 34 bei gewöhnlichem Betrieb im Anschlag. Somit führt eine axiale Verschiebung des Stellkolbens 34 zu einer entsprechenden axialen Verschiebung des Regelkörpers 24. Der Stellkolben 34 hat ferner eine zylindrische Außen- bzw. Mantelfläche 86 mit einer umfänglichen Ringnut zur Aufnahme der zweiten Dichtung 36. Die Mantelfläche 86 ist mit geringem Spiel in der Führungskammer 54 geführt. Im Endbereich der Führungskammer 54, welcher dem Einsatz 40 gegenüberliegt, ist ein zweiter Halteteller 88 befestigt. Der Halteteller 88 hat eine Gasdurchlassöffnung 90 zur Entlüftung des Raumes zwischen Stellkolben 34 und Halteteller 88. Der zweite Halteteller 88 ist ebenfalls vorzugsweise als Kunststoff-Spritzguss-Teil hergestellt. Der Halteteller 88 bildet ein feststehendes Auflager für die zweite Feder 36 derart, dass diese zwischen dem Halteteller 88 und der Aufnahme 82 im Stellkolben 34 gehalten ist und den Stellkolben 34 zum Einsatz 40 bzw. Regelkörper 24 hin vorbelastet. Der Halteteller 88 ist kostengünstig mittels eines einfachen Quersplints 92 befestigt.

Zur vollständigen Beschreibung des Aufbaus des Druckminderers 12 wird nochmals auf die Ausgestaltung des einstückig aus Kunststoff gefertigten Gehäuses 12 eingegangen. Wie aus FIG.1 ersichtlich, ist das Gehäuse 12 gekröpft bzw. abgewinkelt ausgeführt. Entsprechende Ausgestaltungen ermöglichen u.a. Platzeinsparungen und sind unter Verwendung von Kunststoff als Gehäusematerial kostengünstig erzielbar. Die Verschiebungs- bzw. Mittenachse des Regelkörpers 24 liegt rechtwinklig quer zur Mittenachse des Einlass-Anschluss 16. Dementsprechend umfasst das Gehäuse 12 hochdruckseitig einen Einlasskanal mit einem ersten Segment 94 und einem zweiten Segment 96, welche rechtwinklig zueinander liegen. Im Eckbereich der Segmente 92, 96 ist das Gehäuse 12 aus Festigkeitsgründen mit einer kuppel- bzw. sphärenförmigen Verdickung versehen. Das zweite Segment 96 mündet in einen sich sphärisch aufweitenden Übergang zum Einsatz 40 hin. Entsprechend vorteilhafte sphärische Geometrien lassen sich unter Verwendung von Kunststoff im Spritzgießverfahren einfach herstellten. Weiter ist in FIG.1 ein am Einlass 14 vorgesehener Öffnungsstutzen 98 gezeigt, welcher einstückig mit dem Gehäuse 12 ausgebildet ist. Der Öffnungsstutzen 98 dient zum Öffnen eines angeschlossenen CO₂-Behälters wie bspw. einer vom Benutzer austauschbaren Gaspatrone. Ferner ist gemäss FIG.1 auch der Auslass-Anschluss mit seiner Mittenachse quer zur Verschiebungsrichtung des Regelkörpers 24 angeordnet.

Abschließend wird nur kurz die Funktionsweise des Druckminderers erläutert, welche in wesentlichen Zügen derjenigen des Druckminderers nach EP 0 428 901 entspricht. Dynamische Kraft- und Druckeinflüsse werden zur Vereinfachung nicht beschrieben. In drucklosem Zustand wird der Regelkörper 24 durch den Stellkolben 34 bzw. die Feder 36 in offener Stellung gehalten, wobei die Dichtung 28 nicht an der Sitzfläche 32 anliegt, so dass Gas durch die Verbindungsbohrung 46 in die Entspannungskammer 22 strömen kann. Der Benutzer schließt einen Gasbehälter an den Einlassanschluss 16 an, welcher durch den Öffnungsstutzen 98 geöffnet wird. Gas strömt über die Kanalsegmente 94, 96 durch den Einsatz 40, genauer durch die Gasdurchlassöffnung 76, die Führungsbohrung 44 und die Verbindungsbohrung 46, außen am Regelkörper 24 entlang, in die Entspannungskammer 22. Die zweite Feder 36 und der durch die zweite Dichtung 38 abgedichtete Innendurchmesser der Führungskammer 54 sind so dimensioniert, dass beim Erreichen des gewünschten, geminderten Auslass-Drucks in der Entspannungskammer 22, z.B. ein Druck im Bereich von 3-5bar, der Stellkolben 34 sich vom Einsatz 40 weg bewegt, d.h. in Schließrichtung des Regelkörpers 24. Somit bewegt sich auch der Regelkörper 24 in die Schließstellung, d.h. bis zum Anschlag der ersten Dichtung 28 an der Dichtfläche 32. Die erste Feder 26 dient im Wesentlichen der Sicherstellung dieser Schließbewegung, hat also keine wesentliche Regelfunktion. Folglich fällt der Druck in der Entspannungskammer 22 bei Gasentnahme durch den Auslass 18 wieder ab, bis die Federbelastung des Stellkolbens 34 durch die Feder 36 den Stellkolben 34 und damit den Regelkörper 24 wieder in Öffnungsrichtung verschiebt und Gas wieder vom Einlass 14 in die Entspannungskammer 22 strömt. Es stellt sich damit, bei Gleichgewicht zwischen der durch den Druck in der Entspannungskammer 22 auf den Stellkolben 34 ausgeübten Kraft und der entgegengesetzten durch die Feder 36 ausgeübten Kraft, ein gewünschter reduzierter Druck in der Entspannungskammer 22 d.h. am Auslass 18 ein.

Abschließend soll nochmals erwähnt sein, dass dadurch, dass ein sehr geringer Anteil der Bauteile aus Metall gefertigt ist, bspw. lediglich vier bis fünf Bauteile (der Einsatz 40, der darin enthaltene Regelkörper 24 sowie beide Federn 26, 36 und ggf. der Quersplint 92) die Produktkosten deutlich verringert werden, sowohl bzgl. Rohmaterial als auch bzgl. der erforderlichen Bearbeitungsschritte.

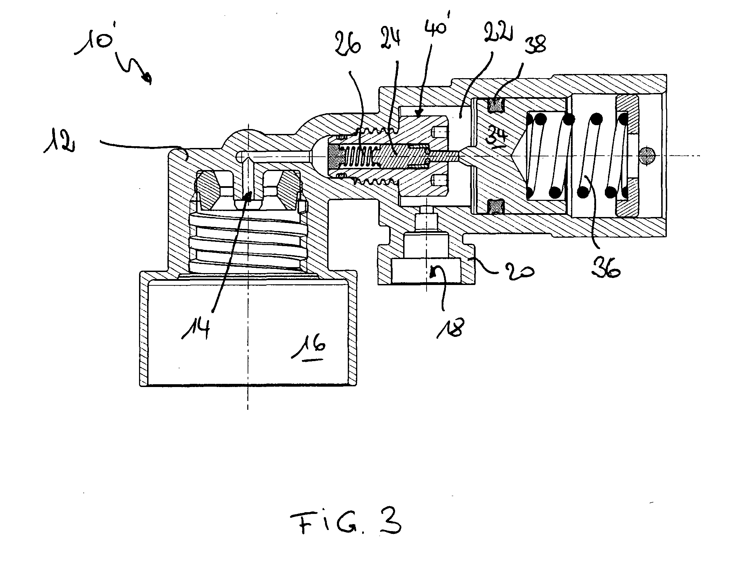

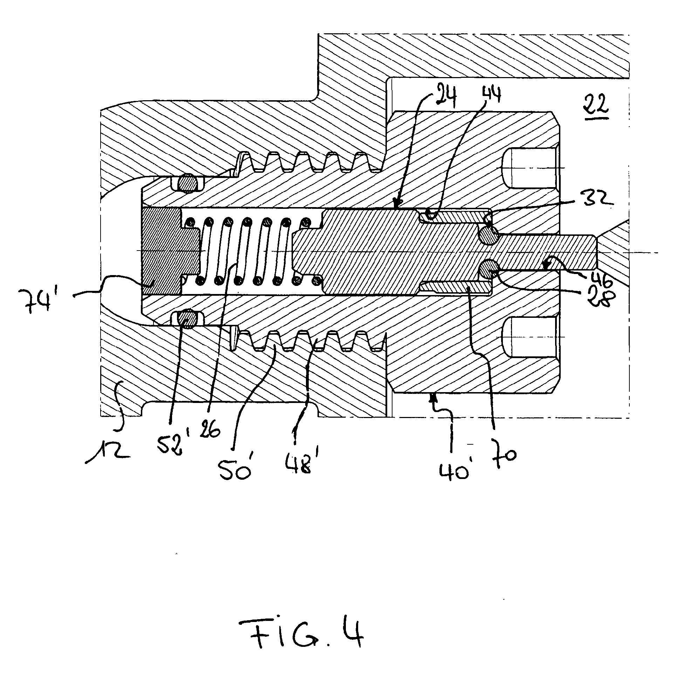

FIG.3 zeigt einen Längsschnitt durch das Gehäuse einer zweiten Ausgestaltung eines erfindungsgemäßen Druckminderers 10' und FIG.4 einen vergrößerten Längsschnitt eines im Druckminderer 10' verwendeten Einsatzes 40'. Bei dieser Ausgestaltung ist der Einsatz 40', anstatt aus einem Metall, aus einem geeigneten Kunststoff gefertigt. Bei dem Kunststoff handelt es sich beispielsweise um ein glasfaserverstärktes Polyamid mit mindestens 30% Glasfaseranteil. Der Einsatz kann beispielsweise aus dem gleichen Kunststoff gefertigt sein wie das Gehäuse 12.

Die anderen Elemente des Druckminderers 10' sind im Wesentlichen gleich mit denen des Druckminderers der FIG.1 und FIG.2. Insbesondere ist der in dem Einsatz 40' gelagerte Regelkörper 24 bei der Ausgestaltung der FIG.3 und 4 weiterhin aus Metall gefertigt, um die Verbindung zwischen Einlass 14 und Entspannungskammer 22 zuverlässig zu verschließen.

Der Druckminderer 10' weist lediglich kleinere Änderungen im Detail auf, die der geringeren Festigkeit des glasfaserverstärkten Kunststoffs (gegenüber der Metallvariante) Rechnung tragen. So ist beispielsweise Außengewinde 48' und Innengewinde 50' in der dargestellten Ausgestaltung als Trapezgewinde ausgebildet um trotz der geringeren Festigkeit des glasfaserverstärkten Kunststoffs die auf den Einsatz wirkenden Kräfte zuverlässig aufzunehmen zu können. Darüber hinaus ist bei der dargestellten Variante die dritte Dichtung 52' stromaufwärts von dem Gewinde 48', 50' angeordnet. In dieser Ausgestaltung ist die Fläche, auf die der Druck hochdruckseitig wirkt, kleiner als in der in FIG.2 dargestellten Ausgestaltung, so dass die auf das Gewinde wirkenden Kräfte entsprechend reduziert werden können.

Desweiteren ist in der Ausgestaltung der FIG.3 und FIG.4, der erste Halteteller 74' als Grobpartikelfilter ausgebildet, beispielsweise aus einem Sintermaterial, das in das stromaufwärts liegende Ende der Führungsbohrung 44 eingepresst sein kann. Ein derartiger Sinterfilter verhindert wirksam, dass Partikel in dem Gasstrom an die Sitzfläche 32 in dem Einsatz 40' gelangen und diese beschädigen können.

Es ist anzumerken, dass bei der in FIG.3 gezeigten Ausgestaltung mit Kunststoffeinsatz 40' der Druckminderer 10' vorzugsweise mit einer Sicherheitseinrichtung versehen ist, die bei einer möglichen Beschädigung der Sitzfläche 32 in dem Einsatz 40' und dem damit einhergehenden Verlust der Druckregelung anspricht, um den dann hohen Eingangs- oder Speicherdruck aus der Entspannungskammer 22 abzuleiten. Es kann sich bei einer solchen Sicherheitseinrichtung beispielsweise um eine federbelastete Sicherheitseinrichtung, die in dem Gehäuse 12 an einer geeigneten Stelle angeordnet ist und in die Entspannungskammer 22 mündet.

**Liste der Bezugszeichen:**

| | | | |
|---|---|---|---|
| 10, 10' | Druckminderer | 84 | Fortsatz |
| 12 | Gehäuse | 86 | Mantelfläche |
| 14 | Einlass | 88 | Halteteller |
| 16 | Einlass-Anschluss | 90 | Gasdurchlassöffnung |
| 18 | Auslass | 92 | Quersplint |
| 20 | Auslass-Anschluss | 94 | erstes Segment |
| 22 | Entspannungskammer | 96 | zweites Segment |
| 24 | Regelkörper | 98 | Öffnungsstutzen |
| 26 | erste Feder | | |
| 28 | erste Dichtung | | |
| 32 | Sitzfläche | | |
| 34 | Stellkolben | | |
| 36 | zweite Feder | | |
| 38 | zweite Dichtung | | |
| 40, 40' | Einsatz | | |
| 42 | Aufnahme | | |
| 44 | Führungsbohrung | | |
| 46 | Verbindungsbohrung | | |
| 48, 48' | Außengewinde | | |
| 50, 50' | Innengewinde | | |
| 52, 52' | dritte Dichtung | | |
| 54 | Führungskammer | | |
| 56 | Schaftabschnitt | | |
| 58 | Kopfabschnitt | | |
| 60 | Anschlag | | |
| 62 | erster Abschnitt | | |
| 64 | zweiter Abschnitt | | |
| 66 | dritter Abschnitt | | |
| 68 | vierter Abschnitt | | |
| 70 | Haltehülse | | |
| 72 | Aufnahme | | |
| 74, 74' | erster Halteteller | | |
| 76 | Gasdurchlassöffnung | | |
| 78 | Einschnürung | | |
| 82 | Lagerung | | |

## Patentansprüche

1. Druckminderer (10) für eine Vorrichtung zur Gasanreicherung von Flüssigkeit, insbesondere zur Kohlendioxid-Anreicherung von Trinkwasser, umfassend:
ein Gehäuse (12) mit einem Einlass (14), einem Einlass-Anschluss (16) zum Anschließen des Druckminderers (10) an einen Gasbehälter, einem Auslass (18), einem Auslass-Anschluss (20) zum Anschließen des Druckminderers an einen Durchlaufmischer, sowie einer Entspannungskammer (22) zum Entspannen des Anreicherungsgas auf einen geminderten Druck;
einen im Gehäuse (12) angeordneten und axial verschiebbaren Regelkörper (24), welcher mittels einer ersten Feder (26) in Schließrichtung federbelastet ist, um eine Verbindung zwischen Einlass (14) und Entspannungskammer (22) zu verschließen;
einen im Gehäuse (12) angeordneten und axial verschiebbaren Stellkolben (34), welcher mittels einer zweiten Feder (36) federbelastet ist, um den Regelkörper (24) abhängig vom Druck
in der Entspannungskammer (22) in Öffnungsrichtung zu verschieben und somit die Verbindung zwischen Einlass (14) und Entspannungskammer (22) zu öffnen, wobei der Stellkolben (34) eine Seite der Entspannungskammer (22) begrenzt, so dass deren variables Innenvolumen von der axialen Position des Stellkolbens (34) bestimmt wird, und eine zweite Dichtung (38) aufweist, welche die Entspannungskammer (22) nach Außen abdichtet;
wobei der Druckminderer (10) weiterhin umfasst
einen separat gefertigten Einsatz (40), welcher in einer Aufnahme (42) zwischen Einlass (14) und Entspannungskammer (22) im Gehäuse (12) aus Kunststoff befestigt ist, wobei der Einsatz (40) eine Bohrung (44), welche mit dem Einlass (14) verbunden ist, und eine an die Bohrung (44) anschließende Verbindungsbohrung (46) aufweist, welche mit der Entspannungskammer (22) verbunden ist und gegenüber der Bohrung (44) reduzierten Durchmesser hat, derart dass der Einsatz (40),
durch die Stufe zwischen Verbindungsbohrung (46) und Bohrung (44), eine ringförmige Schulterfläche ausbildet, welche als Sitztläche (32) mit der ersten Dichtung (28) am Regelkörper (24) zusammenwirkt, **dadurch gekennzeichnet, dass** der Regelkörper (24) eine erste Dichtung (28) aufweist die mit einer Sitzfläche stromaufwärts der Entspannungskammer (22) zusammenwirkt,
das Gehäuse (12) aus Kunststoff gefertigt ist und
der Einsatz (40) eine Führungsbohrung (44) aufweist, die den Regelkörper (24) axial verschiebbar lagert.

2. Druckminderer (10) nach Anspruch 1, **dadurch gekennzeichnet dass** der separat gefertigte Einsatz (40) aus Metall, insbesondere aus Messing, oder aus einem geeigneten Kunststoff, insbesondere einem glasfaserverstärkten Polyamid, gefertigt ist.

3. Druckminderer (10) nach Anspruch 1 oder 2, **dadurch gekennzeichnet dass** das Gehäuse (12) einstückig aus Kunststoff, vorzugsweise als Spritzguss-Teil, gefertigt ist.

4. Druckminderer (10) nach einem der Ansprüche 1 bis 3, **dadurch gekennzeichnet dass** der Einsatz (40) ein Außengewinde (48) aufweist, mittels welchem der Einsatz (40) in einem entsprechenden Innengewinde (50) der Aufnahme (42) eingeschraubt ist und dass zwischen dem Einsatz und dem Gehäuse aus Kunststoff eine dritte Dichtung (52), insbesondere eine O-Ring Dichtung, vorgesehen ist.

5. Druckminderer (10) nach einem der Ansprüche 1 bis 4, **dadurch gekennzeichnet dass** der axial verschiebbare Stellkolben (34) in einer zylindrischen, nach Außen offenen Führungskammer angeordnet ist, in welcher der Stellkolben (34) zum Einsatz hin die variable Entspannungskammer abdichtet, dass die Aufnahme des Einsatzes in die Führungskammer mündet und im wesentlichen zylindrisch mit deutlich geringerem Innendurchmesser als die Führungskammer ausgestaltet ist, wobei der maximale Außendurchmesser des Einsatzes geringer ist als der minimale Innendurchmesser der Führungskammer.

6. Druckminderer (10) nach Anspruch 5, **dadurch gekennzeichnet dass** der Einsatz (40) einen Schaftabschnitt (56) geringeren Durchmessers und einen Kopfabschnitt (58) größeren Durchmessers aufweist und zwischen Kopfabschnitt und Schaftabschnitt eine Schulterfläche ausbildet, welche als axialer Anschlag an einer Schulterfläche anliegt, welche durch die Stufe zwischen Führungskammer und Aufnahme ausgebildet ist.

7. Druckminderer (10) nach Anspruch 4 und 6, **dadurch gekennzeichnet dass** das Außengewinde (48) des Einsatzes (40) an dessen Schaftabschnitt (56) vorgesehen ist und der Kopfabschnitt (58) vorzugsweise ein für ein Schraubwerkzeug geeignetes Profil, insbesondere ein Sechskant-Profil ausbildet.

8. Druckminderer (10) nach einem der Ansprüche 1 bis 7, **dadurch gekennzeichnet dass** der Regelkörper (24) einen einstückig aus Metall gefertigten Drehling (60) umfasst, mit zumindest einem ersten auslassseitigen Abschnitt geringen Durchmessers, einem zweiten mittleren Abschnitt mittleren Durchmessers und einem einlassseitigen dritten Abschnitt größeren Durchmessers, wobei der erste Abschnitt mit geringem Radialspiel, vorzugsweise 0.02 bis 0.2 mm, durch die Verbindungsbohrung im Einsatz hindurch ragt und am Stellkolben anliegt, im Übergang zwischen erstem und zweitem Abschnitt die erste Dichtung gehalten ist, und der dritte Abschnitt mit geringem Radialspiel, vorzugsweise 0.02 bis 0.2 mm, in der Führungsbohrung im Einsatz geführt ist.

9. Druckminderer (10) nach Anspruch 8, **dadurch gekennzeichnet dass** der Drehling (60) im Übergang zwischen erstem und zweitem Abschnitt eine umfängliche Aussparung zur Halterung der ersten Dichtung aufweist und der zweite Abschnitt ein Außengewinde aufweist, wobei der Regelkörper eine Haltehülse umfasst, welche zur Sicherung der ersten Dichtung auf das Außengewinde im zweiten Abschnitt aufgeschraubt ist.

10. Druckminderer (10) nach Anspruch 8 oder 9, **dadurch gekennzeichnet dass** der Drehling (60) einlassseitig einen vierten Abschnitt geringeren Durchmessers aufweist, welcher als radiale Lagerung der ersten Feder (26) dient.

11. Druckminderer (10) nach einem der Ansprüche 1 bis 10, **dadurch gekennzeichnet dass** im Einsatz einlassseitig eine Aufnahme vorgesehen ist, in welcher ein erster Halteteller mit Gasdurchlassöffnung gehalten ist, welcher ein feststehendes Auflager der ersten Feder (26) ausbildet.

12. Druckminderer (10) nach einem der Ansprüche 1 bis 11, **dadurch gekennzeichnet dass** der Stellkolben (34) einstückig gefertigt ist, vorzugsweise als Spritzguss-Teil aus Kunststoff, und eine Rückseite mit einer Lagerung für die zweite Felder (36), eine Vorderseite mit einem koaxialen Fortsatz, welcher mit dem Regelkörper (24), insbesondere mit der Stirnseite des ersten auslassseitigen Abschnitts, zu dessen Verschiebung zusammenwirkt, sowie eine zylindrische Mantelfläche mit einer umfänglichen Nut zur Aufnahme der zweiten Dichtung (38) aufweist.

13. Druckminderer (10) nach Anspruch 12, wobei im Ende der Führungskammer (54), welches dem Einsatz (40) gegenüberliegt, ein zweiter Halteteller (88) mit Gasdurchlassöffnung befestigt ist, welcher vorzugsweise als Spritzguss-Teil aus Kunststoff hergestellt ist, und welcher ein feststehendes Auflager der zweiten Feder (36) ausbildet, wobei die zweite Feder (36) zwischen Halteteller (88) und Aufnahme im Stellkolben (34) gehalten ist.

14. Druckminderer (10) nach einem der Ansprüche 1 bis 13, **dadurch gekennzeichnet dass** das Gehäuse (12) gekröpft ausgeführt ist, vorzugsweise mit einem Einlass-Anschluss (16) und einem Auslass-Anschluss (20) deren Mittenachse quer zur Verschiebungsrichtung des Regelkörpers verlaufen.

15. Druckminderer (10) nach einem der Ansprüche 1 bis 14, **dadurch gekennzeichnet dass** der Einlass-Anschluss (16) und/oder der Auslass-Anschluss (20) durch ein einstückig mit dem Gehäuse (12) geformtes Gewinde ausgebildet ist.

## Claims

1. A pressure reducer (10) for a device for enriching a liquid with gas, in particular for enriching drinking water with carbon dioxide, comprising:
a housing (12) with an inlet (14), an inlet port (16) for connecting the pressure reducer (10) to a gas vessel, an outlet (18), an outlet port (20) for connecting the pressure reducer to a continuous flow mixer, and an expansion chamber (22) for expanding the enrichment gas to a reduced pressure;
a control body (24) arranged axially displaceably in the housing (12), which control body (24) is spring-loaded in the closing direction by means of a first spring (26), in order to close a connection between the inlet (14) and expansion chamber (22);
an actuating piston (34) arranged axially displaceably in the housing (12), which actuating piston (34) is spring-loaded by means of a second spring (36), in order to displace the control body (24) in the opening direction as a function of the pressure in the expansion chamber (22) and thus to open the connection between the inlet (14) and expansion chamber (22),
wherein the actuating piston (34) defines one side of the expansion chamber (22), such that the variable internal volume thereof is determined by the axial position of the actuating piston (34), and
comprises a second seal (38) which seals the expansion chamber (22) relative to the outside;
wherein the pressure reducer (10) furthermore comprises a separately made insert (40) which is fixed in a receptacle (42) between the inlet (14) and expansion chamber (22) in the housing (12) of plastic, wherein the insert (40) comprises a bore (44), which is connected to the inlet (14),
and a connecting bore (46) adjoining the bore (44), which connecting bore (46) is connected to the expansion chamber (22) and is of a reduced diameter relative to the bore (44), such that the insert (40), thanks to the step between the connecting bore (46) and bore (44), forms an annular shoulder surface which interacts as a seating surface (32) with the first seal (28) on the control body (24), **characterised in that** the control body (24) comprises a first seal (28) which interacts with a seating surface upstream of the expansion chamber (22), the housing (12) is made of plastic and the insert (40) comprises a guide bore (44) which supports the control body (24) axially displaceably.

2. A pressure reducer (10) according to claim 1, **characterised in that** the separately made insert (40) is made of metal, in particular of brass, or of a suitable plastic, in particular of a glass fibre-reinforced polyamide.

3. A pressure reducer (10) according to claim 1 or claim 2, **characterised in that** the housing (12) is made in one piece of plastic, preferably as an injection moulded part.

4. A pressure reducer (10) according to any one of claims 1 to 3, **characterised in that** the insert (40) comprises an external thread (48), by means of which the insert (40) is screwed into a corresponding internal thread (50) of the receptacle (42) and **in that** a third seal (52), in particular an O-ring seal, is provided between the insert and the housing of plastic.

5. A pressure reducer (10) according to any one of claims 1 to 4, **characterised in that** the axially displaceable actuating piston (34) is arranged in a cylindrical guide chamber open to the outside, in which the actuating piston (34) seals the variable expansion chamber relative to the insert, **in that** the receptacle of the insert opens into the guide chamber and is of substantially cylindrical construction with a distinctly smaller internal diameter than the guide chamber, wherein the maximum external diameter of the insert is smaller than the minimum internal diameter of the guide chamber.

6. A pressure reducer (10) according to claim 5, **characterised in that** the insert (40) comprises a shank portion (56) of smaller diameter and a head portion (58) of larger diameter and forms a shoulder surface between the head portion and shank portion, which shoulder surface rests as an axial limit stop against a shoulder surface which is formed by the step between the guide chamber and receptacle.

7. A pressure reducer (10) according to claim 4 and claim 6, **characterised in that** the external thread (48) of the insert (40) is provided on the shank portion (56) thereof and the head portion (58) preferably forms a profile suitable for a screwing tool, in particular a hexagonal profile.

8. A pressure reducer (10) according to any one of claims 1 to 7, **characterised in that** the control body (24) comprises a turning (60) made in one piece from metal, with at least one first portion of small diameter at the outlet end, a second middle portion of moderate diameter and a third portion of a larger diameter at the inlet end, wherein the first portion protrudes with slight radial play, preferably of 0.02 to 0.2 mm, through the connecting bore in the insert and rests against the actuating piston, the first seal is mounted at the transition between the first and second portions, and the third portion is guided with slight radial play, preferably of 0.02 to 0.2 mm, in the guide bore in the insert.

9. A pressure reducer (10) according to claim 8, **characterised in that**, at the transition between the first and second portions, the turning (60) comprises a circumferential recess for retaining the first seal and the second portion comprises an external thread, wherein the control body comprises a retaining sleeve which is screwed onto the external thread in the second portion to secure the first seal.

10. A pressure reducer (10) according to claim 8 or claim 9, **characterised in that**, at the inlet end, the turning (60) comprises a fourth portion of smaller diameter which serves as a radial mount for the first spring (26).

11. A pressure reducer (10) according to any one of claims 1 to 10, **characterised in that** a receptacle is provided in the insert at the inlet end, in which receptacle is mounted a first retaining plate with a gas passage, which forms an immobile support for the first spring (26).

12. A pressure reducer (10) according to any one of claims 1 to 11, **characterised in that** the actuating piston (34) is made in one piece, preferably as an injection moulded part of plastic, and comprises a reverse side with a mount for the second spring (36), a front side with a coaxial extension, which interacts with the control body (24), in particular with the end face of the first portion at the outlet end, for the displacement thereof, and a cylindrical circumferential surface with a circumferential groove for accommodating the second seal (38).

13. A pressure reducer (10) according to claim 12, wherein a second retaining plate (88) with a gas passage is fixed in the opposite end of the guide chamber (54) to the insert (40), which retaining plate (88) is preferably produced as an injection moulded part of plastic, and which forms an immobile support for the second spring (36), wherein the second spring (36) is mounted in the actuating piston (34) between the retaining plate (88) and receptacle.

14. A pressure reducer (10) according to any one of claims 1 to 13, **characterised in that** the housing (12) is of right-angled construction, preferably with an inlet port (16) and an outlet port (20), the centre axis of which extends transversely of the displacement direction of the control body.

15. A pressure reducer (10) according to any one of claims 1 to 14, **characterised in that** the inlet port (16) and/or the outlet port (20) takes the form of a thread formed in one piece with the housing (12).

## Revendications

1. Réducteur de pression (10) pour un dispositif d'enrichissement d'un liquide en gaz, notamment d'enrichissement d'eau potable en dioxyde de carbone, comprenant :
un boîtier (12) pourvu d'une entrée (14), d'un raccord d'entrée (16) permettant le raccord du réducteur de pression (10) à une bouteille de gaz, d'une sortie (18), d'un raccord de sortie (20) permettant le raccord du réducteur de pression à un mélangeur continu, ainsi que d'une chambre de détente (22) permettant de détendre le gaz d'enrichissement à une pression réduite ;
un corps de réglage (24) disposé dans le boîtier (12) et axialement déplaçable, qui est sollicité par ressort dans la direction de la fermeture au moyen d'un premier ressort (26) pour fermer une communication entre l'entrée (14) et la chambre de détente (22) ;
un piston de commande (34) disposé dans le boîtier (12) et axialement déplaçable, qui est sollicité par ressort au moyen d'un second ressort (36) pour déplacer le corps de réglage (24) dans la direction d'ouverture en fonction de la pression dans la chambre de détente (22) et ouvrir ainsi la communication entre l'entrée (14) et la chambre de détente (22), le piston de commande (34) limitant un côté de la chambre de détente (22) de telle sorte que son volume intérieur variable soit déterminé par la position axiale du piston de commande (34), et étant pourvu d'une deuxième garniture d'étanchéité (38) qui assure l'étanchéité de la chambre de détente (22) vers l'extérieur ;
le réducteur de pression (10) comprenant, en outre,
un insert (40) fabriqué séparément qui est fixé dans le boîtier (12) en matière plastique dans un logement (42) entre l'entrée (14) et la chambre de détente (22), l'insert (40) ayant un orifice (44) qui communique avec l'entrée (14) et un orifice de communication (46) contigu à l'orifice (44), qui communique avec la chambre de détente (22) et a un diamètre réduit par rapport à l'orifice (44), de telle sorte que l'insert (40) forme, grâce au gradin entre l'orifice de communication (46) et l'orifice (44), une surface d'épaulement annulaire qui coopère en tant que surface d'assise (32) avec la première garniture d'étanchéité (28) sur le corps de réglage (24),
**caractérisé en ce que** le corps de réglage (24) est pourvu d'une première garniture d'étanchéité (28) qui coopère avec une surface d'assise en amont de la chambre de détente (22), le boîtier (12) est fabriqué en matière plastique et l'insert (40) a un orifice de guidage(44) qui forme pour le corps de réglage (24) un logement permettant un déplacement axial.

2. Réducteur de pression (10) selon la revendication 1, **caractérisé en ce que** l'insert (40) fabriqué séparément est en métal, en particulier en laiton, ou en une matière plastique appropriée, en particulier un polyamide renforcé par des fibres de verre.

3. Réducteur de pression (10) selon la revendication 1 ou 2, **caractérisé en ce que** le boîtier (12) est fabriqué d'une seule pièce en matière plastique, de préférence en tant que pièce coulée par injection.

4. Réducteur de pression (10) selon l'une des revendications 1 à 3, **caractérisé en ce que** l'insert (40) est pourvu d'un filetage extérieur (48) permettant de visser l'insert (40) dans un filetage intérieur (50) correspondant du logement (42), et **en ce qu'**une troisième garniture d'étanchéité (52), notamment un joint d'étanchéité torique, est prévue entre l'insert et le boîtier en matière plastique.

5. Réducteur de pression (10) selon l'une des revendications 1 à 4, **caractérisé en ce que** le piston de commande (34) axialement déplaçable est disposé dans une chambre de guidage cylindrique ouverte vers l'extérieur dans laquelle le piston de commande (34) ferme la chambre de détente variable de façon étanche en direction de l'insert, **en ce que** le logement de l'insert débouche dans la chambre de guidage et a une forme essentiellement cylindrique avec un diamètre intérieur nettement inférieur à celui de la chambre de guidage, le diamètre extérieur maximal de l'insert étant inférieur au diamètre intérieur minimal de la chambre de guidage.

6. Réducteur de pression (10) selon la revendication 5, **caractérisé en ce que** l'insert (40) présente une partie de tige (56) de diamètre inférieur et une partie de tête (58) de diamètre supérieur et forme, entre la partie de tête et la partie de tige, une surface d'épaulement qui est en contact, en tant que butée axiale, avec une surface d'épaulement qui est formée par le gradin entre la chambre de guidage et le logement.

7. Réducteur de pression (10) selon les revendications 4 et 6, **caractérisé en ce que** le filetage extérieur (48) de l'insert (40) est prévu sur sa partie de tige (56) et la partie de tête (58) forme de préférence un profil adapté pour un outil à visser, notamment un profil à six pans.

8. Réducteur de pression (10) selon l'une des revendications 1 à 7, **caractérisé en ce que** le corps de réglage (24) comprend une pièce tournée (60) fabriquée en métal de manière unitaire, avec au moins une première partie, côté sortie, de diamètre réduit, une deuxième partie, médiane, de diamètre moyen, et une troisième partie, côté entrée, de diamètre plus grand, la première partie faisant saillie, avec un faible jeu radial, de préférence entre 0,02 mm et 0,2 mm, à travers l'orifice de communication de l'insert et étant en contact avec le piston de commande, la première garniture d'étanchéité étant fixée dans la jonction entre la première et la deuxième partie et la troisième partie étant guidée, avec un faible jeu radial, de préférence entre 0,02 mm et 0,2 mm, dans l'orifice de guidage de l'insert.

9. Réducteur de pression (10) selon la revendication 8, **caractérisé en ce que** la pièce tournée (60) est pourvue, au niveau de la jonction entre la première et la deuxième partie, d'un évidement circonférentiel permettant de fixer la première garniture d'étanchéité et la deuxième partie présente un filetage extérieur, le corps de réglage comprenant un manchon de maintien qui est vissé sur le filetage extérieur de la deuxième partie pour immobiliser la première garniture d'étanchéité.

10. Réducteur de pression (10) selon la revendication 8 ou 9, **caractérisé en ce que** la pièce tournée (60) est pourvue, côté entré, d'une quatrième partie de diamètre réduit qui sert de support radial pour le premier ressort (26).

11. Réducteur de pression (10) selon l'une des revendications 1 à 10, **caractérisé en ce qu'**un logement est prévu dans l'insert, côté entrée, logement dans lequel un premier disque de retenue pourvu d'une ouverture de passage de gaz est maintenu, lequel disque forme un appui fixe pour le premier ressort (26).

12. Réducteur de pression (10) selon l'une des revendications 1 à 11, **caractérisé en ce que** le piston de commande (34) est fabriqué d'une seule pièce, de préférence en tant que pièce moulée par injection en matière plastique, et possède un côté postérieur avec un support pour le second ressort (36), un côté antérieur avec une saillie coaxiale qui coopère avec le corps de réglage (24), notamment avec le côté frontal de la première partie côté sortie, pour son déplacement, et une surface périphérique cylindrique pourvue d'une rainure circonférentielle pour recevoir la deuxième garniture d'étanchéité (38).

13. Réducteur de pression (10) selon la revendication 12, un second disque de retenue (88) pourvu d'une ouverture de passage de gaz, qui est fabriqué de préférence en tant que de pièce moulée par injection en matière plastique et forme un appui fixe pour le second ressort (36), étant fixé dans l'extrémité de la chambre de guidage (54) qui est opposée à l'insert (40), le second ressort (36) étant maintenu entre le disque de retenue (88) et le logement dans le piston de commande (34).

14. Réducteur de pression (10) selon l'une des revendications 1 à 13, **caractérisé en ce que** le boîtier (12) est exécuté de manière coudée, de préférence avec un raccord d'entrée (16) et un raccord de sortie (20) dont les axes centraux s'étendent perpendiculairement à la direction de déplacement du corps de réglage.

15. Réducteur de pression (10) selon l'une des revendications 1 à 14, **caractérisé en ce que** le raccord d'entrée (16) et/ou le raccord de sortie (20) est/sont formé/s par un filetage solidaire du boîtier (12).
